# EUROPEAN PATENT APPLICATION

(11) **EP 2 568 111 A1**
(43) Date of publication of application: **13.03.2013**
(21) Application number: 11180235.1
(22) Date of filing: 06.09.2011
(51) Int. Cl.: E21B 43/00

(54) **Method and system for using heat obtained from a fossil fuel reservoir**

(71) Applicant: Siemens Aktiengesellschaft, 80333 München (DE)
(72) Inventor: Danov, Vladimir, 91056 Erlangen (DE); Magdalinski, Heidi, 47475 Kamp-Lintfort (DE); Okhuijsen, Bob, 9408 LJ Assen (NL)

(57) **Abstract**

The invention relates to a method and to a system for using heat obtained from a fossil fuel reservoir. The method comprises obtaining the thermal energy from the fossil fuel reservoir, and feeding atleast a part of the thermal energy so obtained to a thermal energy using device. The thermal energy using device then uses atleast a part of the thermal energy so fed to convert it to another form of energy and/or to generate cold and/or to transfer the thermal energy to a point.

## Description

The invention relates to a method and to a system for using heat obtained from a fossil fuel reservoir.

In its natural settings, fossil fuels such as oil, natural gas, etc are found in different reservoirs below the surface of the Earth. Natural gas, as it exists underground, or crude oil is much different from what is received or used by consumers. Thus, a necessary step is processing of raw fossil fuel before its transportation or storage. The processing involves removal of other chemical components, physical conditioning, and improvement in quality of the unprocessed produce from the reservoirs. It requires energy to be provided from an external source. The processing is low on efficiency, due to high energy requirement and complete dependency on external energy sources. Besides the low efficiency, the energy usage in processing step results in increase of the price of the fossil fuel.

Furthermore, in processing of certain fossil fuels such as natural gas, there is a need of cooling the natural gas. The conventional methods rapidly expand the gas to bring down the temperature. However, this results in drop of pressure. To regain the pressure, which is essential for gas processing, additional compression or similar other processes are used that consume energy. Thus, the efficiency of the processing further goes down.

For the purpose of the invention processing of raw fossil fuel includes production of the fossil fuel. Similarly fossil fuel processing facility includes fossil fuel production facility.

Thus, processing of raw fossil fuel, as known presently, has a high energy requirement in common, resulting in poor overall efficiency and increased price.

The object of the invention is therefore to disclose a method and a system for fossil fuel processing facilities, making the processing of the fossil fuel more efficient and economically beneficial.

These objects are achieved by the inventions disclosed in a method of claim 1 and a system of claim 11. Advantageous developments emerge from the dependent claims.

With a method according to the invention thermal energy from a fossil fuel reservoir is obtained and used. The method in the invention is for using thermal energy from the fossil fuel reservoir, comprising obtaining the thermal energy from the fossil fuel reservoir, and feeding atleast a part of the thermal energy so obtained to a thermal energy using device. By the use of the thermal energy so obtained, the efficiency of processing of the fossil fuel is enhanced.

In a preferable embodiment of the method, the thermal energy using device uses atleast a part of the thermal energy so fed to convert it to another form of energy and/or to generate cold and/or to transfer the thermal energy to a point. The cold and/or other form of energy generated and/or the thermal energy so transferred can then be used in an unrelated external system or process, or may be redirected back into the fossil fuel processing. It is noteworthy that fossil fuel processing includes fossil fuel production.

The cold and/or the other form of energy and/or the thermal energy so used reduces the net energy requirement from external sources in the fossil fuel processing, or in the unrelated external system or process. It also results in economic benefits by reducing the cost of processing of the fossil fuel.

In another embodiment of the method, the thermal energy using device uses atleast a part of the thermal energy so fed and generates the cold by absorption refrigeration process. The cold so generated provides for a usable source of cold from the processing of the fossil fuel.

In another embodiment of the method the cold is used for liquefaction of a gas. The gas can be any gas including the natural gas extracted from the reservoir. This will obviate the requirement of external cold generating process or system.

In another embodiment of the method the thermal energy using device uses atleast a part of the thermal energy so fed and converts it to electrical energy. This electrical energy can be used, and thus provides a usable source of electrical energy from the processing of the fossil fuel.

In another embodiment of the method atleast a part of the thermal energy converted to electrical energy is converted by Kalina process and/or organic Rankine process (ORC process) and/or thermoelectric effect. This provides a preferable and efficient method of generating electrical energy from the thermal energy obtained from the fossil fuel reservoir.

In another embodiment of the method the electrical energy is used as input energy at another step in the processing of the fossil fuel of the reservoir. Thus, decreasing the electrical energy requirement from external sources and enhancing the efficiency of the processing of the fossil fuel.

In another embodiment of the method the thermal energy using device uses atleast a part of the thermal energy so fed and converts it to mechanical energy. This mechanical energy can then be used to drive any mechanical system or process, related or unrelated to the processing of the fossil fuel. This provides a usable source of mechanical energy from the processing of the fossil fuel.

In another embodiment of the method the mechanical energy so generated is used to pump a fluid. This fluid can be the fossil fuel such as oil or natural gas being processed and thus the requirement of an external energy source for pumping the same is obviated. Fossil fuel being processed includes fossil fuel being produced.

In another embodiment of the method, the thermal energy is obtained from the fossil fuel obtained from the reservoir. This provides the advantage of employing the method in a place removed from the site of fossil fuel reservoir.

With a system for using thermal energy from a fossil fuel reservoir, the method of the invention is used. The system comprises means for obtaining thermal energy adapted to obtain thermal energy from a fossil fuel reservoir, and a thermal energy using device wherein the thermal energy using device is thermally connected with the means for obtaining thermal energy.

In a preferable embodiment of the system, the thermal energy using device is adapted to use atleast a part of the thermal energy to convert it to another form of energy and/or to generate cold and/or to transfer the thermal energy to a point. This will provide a usable form of energy and/or cold.

In another preferable embodiment of the system, the means for obtaining thermal energy is adapted to obtain thermal energy from fossil fuel extracted from the reservoir. Thus, the system can be operationally independent of the fossil fuel reservoir.

In another preferable embodiment of the system, the thermal energy using device is an absorption refrigerator. The output of the system will be usable form of cold.

In another preferable embodiment of the system, the thermal energy using device is a thermocouple. The output of the system will be usable form of electrical energy.

In another preferable embodiment of the system, the thermal energy using device is a heat engine. The output of the system will be usable form of mechanical energy.

In another preferable embodiment of the system, the thermal energy using device is a heat exchanger. The output of the system will be usable form of thermal energy.

The claims, according to the invention, have a common advantage for fossil fuel processing facilities which is decreasing the dependency on external energy sources in the processing of the fossil fuel.

Additionally, the need for using compression or similar other processes, in case of fossil fuels such as natural gas cooling is obviated as there is cooling of natural gas without pressure drop.

The present invention is further described hereinafter with reference to illustrated embodiments shown in the accompanying drawings, in which:
- FIG 1: illustrates a schematic drawing of a system for using heat obtained from a fossil fuel reservoir according to an exemplary embodiment herein.
- FIG 2: illustrates a schematic drawing of a method for using heat obtained from a fossil fuel reservoir.
- FIG 3: illustrates a schematic drawing of a preferable embodiment of the method for using heat obtained from a fossil fuel reservoir to generate cold.
- FIG 4: illustrates a schematic drawing of yet another preferable embodiment of the method for using heat obtained from a fossil fuel reservoir to generate another form of energy.

Hereinafter, the best mode for carrying out the present invention is described in details. Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Fossil fuels are hydrocarbon fuels formed by natural processes and include natural gas, petroleum, coal, etc.

Raw natural gas comes from three types of reservoirs or wells: oil wells, gas wells, and condensate wells. Oil wells are reservoirs that have a sufficient amount of oil in it and the natural gas is either dissolved in the oil (dissolved gas) or free from the oil (free gas). Natural gas that comes from oil wells is typically termed 'associated gas'. Natural gas from gas and condensate wells, in which there is little or no crude oil respectively, is termed 'non-associated gas'. Gas reservoir or gas wells typically produce raw natural gas by itself, while condensate wells produce free natural gas along with a semi-liquid hydrocarbon condensate.

Whatever is the source of the natural gas, once separated from crude oil (if present) it commonly exists in mixtures with other hydrocarbons; principally ethane, propane, butane, and pentanes. In addition, raw natural gas contains H₂O vapour, H₂S, CO₂, helium, nitrogen, and other compounds. These components are either completely removed from the pure gas or their proportions are reduced in the processing carried out as a downstream process.

Similarly petroleum, simply referred to as oil, after being produced from an oil reservoir is processed, i.e. refined and separated into a large number of consumer products, from petrol and kerosene to asphalt and chemical reagents used to make plastics and pharmaceuticals.

Thus, in the production stage crude fossil fuel is taken out from the reservoirs or wells. Sometimes the production stage is also referred to as the extraction stage. A network of valves called production tree regulates the flow rate of the fossil fuel from the top of well heads in the production stage.

From the outlet valve of the production tree, the flow is connected to a distribution network of pipelines and tanks to supply the product to refineries, natural gas compressor stations, or oil export terminals to carry out the downstream processing.

The fossil fuels, also referred to as petrochemicals, such as produced crude oil or natural gas require to be subjected to processing before what is commonly known as 'pipeline quality' is obtained. This processing of the raw or crude fossil fuel consists of removal of various hydrocarbons and fluids from the pure, as desired, fossil fuel, to produce the 'consumer-usable' or 'pipeline' quality.

The processing of the fossil fuel includes, but not limited to, steps such as desalting, distillation, desulfurization, catalytic reformation, cracking, oxidizing, coking, alkylation, dimerisation, isomerisation, steam reforming, heating, separating, cooling, expanding, storing, compressing, filtering, refining, dewaxing, etc.

This production and processing requires use of various equipments and techniques such as pumping, vacuum distillation, low-temperature separators, heating, cryogenic expansion, desiccators, etc. A majority of these techniques and equipments require energy for their operation. Cooling, heating, mechanical energy driven operations, electrical energy driven operations are some of the examples. They also have an economic influence on the price of the fossil fuel so produced and processed.

The reservoirs of the fossil fuel are at different depths and in different locations. Depending on the reservoir depth and location, usually, the temperature of the reservoir and its contents ranges from 70°C to above 100°C. The invention uses the thermal energy from the reservoir and uses it to convert to another form of energy and/or to generate cold and/or to transfer the thermal energy from the reservoir to a point. Thus, the result is increase in the efficiency of the production and/or processing of the fossil fuel as well as the decrease in the related costs and thereby a decrease in the price of the fossil fuel.

It must be noted that for the purpose of the invention processing includes production.

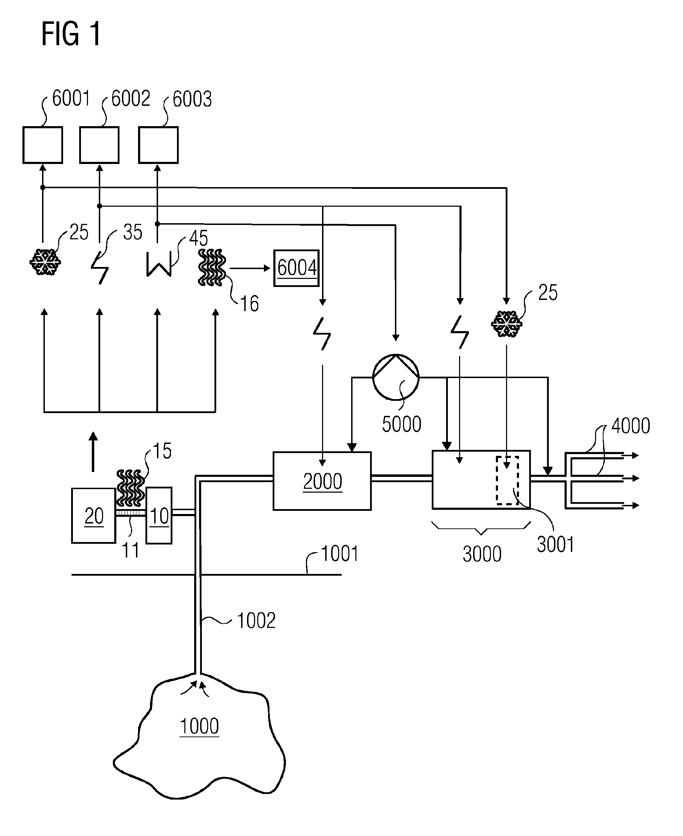

Figure 1 illustrates a schematic drawing of a system for using heat obtained from a fossil fuel reservoir 1000 according to an exemplary embodiment herein. The fossil fuel reservoir 1000 is, but not limited to, oil well, gas well, condensate well, oil sand deposit etc. In the following, the gas reservoir 1000 is, but not limited to, the source of thermal energy 15. The system for using the thermal energy 15 from the reservoir 1000 comprises means 10 for obtaining the thermal energy 15 and a device 20 adapted to use the thermal energy 15. The means 10 is adapted to obtain the thermal energy 15 from the reservoir 1000.

The means 10 is, but not limited to, a heat receiver, or a production channel 1002 for the gas 1001, or a conducting coil (not shown in the figure) or a rod (not shown in the figure) extending from the reservoir 1000 to a surface 1001 of the earth above the reservoir 1000. The heat receiver 10 obtains the thermal energy 15 from the reservoir 1000 by a process of, but not limited to, conduction, convection, radiation or mass transfer.

The thermal energy using device 20 is thermally connected with the heat receiver 10, by either direct contact or by a thermal connection 11. Atleast a part of the thermal energy 15, obtained from the reservoir 1000 by the heat receiver 10, is directed to the thermally connected device 20. For this, the device 20 and thermal receiver 10 are thermally connected. The thermal connection 11 can be, but not limited to, a heat conducting device i.e. a heat conductor or a block of heat conducting metal or a heat conducting alloy.

Atleast a part of the thermal energy 15 so fed to the device 20 is then converted to another form of energy 35, 45 and/or used to generate cold 25 and/or transferred to another point as thermal energy 16, by the device 20. Thus, the output of the device 20 is the other form of energy 35, 45 and/or cold 25 and/or thermal energy 16.

In one embodiment, the device 20 is, but not limited to, an absorption refrigerator. Atleast a part of the thermal energy 15 fed to the device 20 is then used to generate the cold 25. The cold 25 so obtained as output of the device 20 is either directed to a cold user 6001, or is used at a point in the processing of the fossil fuel. The cold user 6001 is an external system, process, equipment or apparatus such as a cooling chamber and is adapted to use the cold 25. Alternatively, the cold 25 can be used in a liquefaction unit 3000 for the natural gas produced from the reservoir 1000. The liquefaction unit 3001 may be a part of a processing system 3000. The processing system 3000 is a system adapted to perform the processing of the natural gas before it is supplied to the consumer or user. The use of the cold 25 so generated by the device 20 thus reduces the cost of processing of the natural gas and increases the efficiency of the processing of the fossil fuel.

In another embodiment, the device 20 is, but not limited to, a thermocouple or a thermopile or any device that is adapted to carry out the Kalina process and/or the organic Rankine cycle and/or the thermoelectric effect. Atleast a part of the thermal energy 15 fed to the device 20 is then converted to electrical energy 35. The electrical energy 35 so obtained as output of the device 20 is either used in an electric user 6002 or is used at a point in the processing of the fossil fuel. The electric user 6002 is an external system, process, equipment or apparatus such as an electric motor and is adapted to use the electrical energy 35. The electrical energy 35 can be used in a fossil fuel production system 2000 or the processing system 3000. The production system 2000 is a system adapted to perform the production of the fossil fuel from the fossil fuel reservoir 1000. The use of the electrical energy 35 so generated by the device 20 thus reduces the cost and increases the efficiency of processing of the fossil fuel.

In yet another embodiment, the device 20 is, but not limited to, a heat engine. Atleast a part of the thermal energy 15 fed to the device 20 is then converted to mechanical energy 45. The mechanical energy 45 so obtained as output of the device 20 is either used in a mechanical user 6003, or is used at a point in the processing of the fossil fuel. The mechanical user 6003 is an external system, process, equipment or apparatus such as a generator and is adapted to use the mechanical energy 45, The mechanical energy 45 can be used in a mechanical pump 5000 to pump a fluid (not shown in the figure) through the fossil fuel production system 2000 or the processing system 3000 or a distribution network 4000. The use of the mechanical energy 45 so generated by the device 20 thus reduces the cost and increases the efficiency of processing of the fossil fuel.

In yet another embodiment, the device 20 is, but not limited to a heat exchanger. Atleast a part of the thermal energy 15 fed to the device 20 is then transferred as thermal energy 15 to another point (not shown in the figure). The point to which the thermal energy 15 is transferred to is, but not limited to, a part of an external system 6004 adapted to use thermal energy 15. Additionally, the thermal energy 15, obtained as an output of the device 20, can be used at a point in the processing of the fossil fuel obtained from the reservoir 1000. The use of the thermal energy 15 so transferred by the device 20 thus reduces the cost and increases the efficiency of processing of the fossil fuel.

The means 10 for obtaining the thermal energy 15 may be a wall of the thermal energy using device 20 or a formation on the device 20 adapted to obtain the thermal energy 15 from the reservoir 1000.

In yet another preferable embodiment, the thermal energy 15 is obtained from the natural gas (not shown in the figure) obtained from the reservoir 1000. The gas obtained from the reservoir is at a raised temperature comparable to the temperature of the reservoir 1000. The thermal energy 15 can be obtained not directly from the reservoir 1000 but from the gas obtained from it. The thermal energy 1000 can be obtained from the gas flowing through the production channel 1002 or from the gas stored after obtaining from the reservoir 1000. In the embodiment, the means 10 is in thermal connection with the production channel 1002. The production channel 1002 is, but not limited to, a tube or a drilled hole extending from the reservoir to above the surface 1001. Alternatively the gas can be transferred to another place via a transporting medium (not shown in the figure) such as tankers or transporting network of pipes. At this other place the thermal energy 15 can be obtained by the means 10.

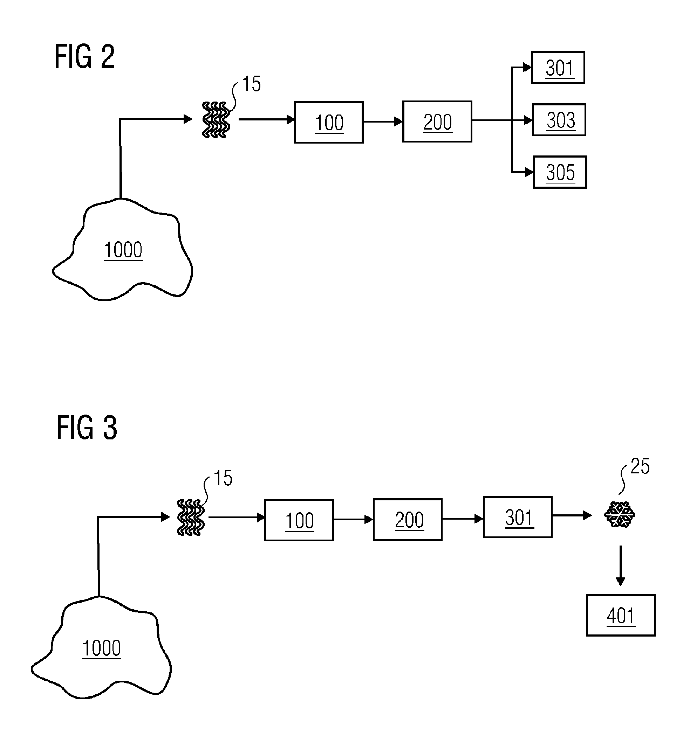

Figure 2 illustrates a schematic drawing of a method for using heat obtained from a fossil fuel reservoir. The method comprises a step 100 of obtaining the thermal energy 15 and a step 200 of feeding atleast a part of the thermal energy 15 so obtained to a device 20.

The thermal energy 15 from the reservoir 1000 is obtained in the step 100. The step 100 is performed in the means 10 for obtaining the thermal energy 15 from the reservoir 1000. The thermal energy 15, thus obtained in the step 100 is fed to thermal energy using device 20 in the step 200. Atleast a part of the thermal energy 15 so obtained is fed to the device 20 in step 200. The thermal energy 15 so fed to the device 20 is then used to generate cold 25 in the step 301 and/or is converted to another form of energy 35, 45 in a step 303, and/or is transferred to another point as thermal energy 16 in a step 305. The step 305 includes heating a point.

Figure 3 illustrates a schematic drawing of a preferable embodiment of the method for using heat obtained from a fossil fuel reservoir to generate cold. The thermal energy 15 obtained in the step 100 from the reservoir 1000 is fed to the device 20 in the step 200. The device 20 in this embodiment is adapted to generate the cold 25 and may be, as described earlier, an absorption refrigerator. In a step 301 atleast a part of the thermal energy fed in the step 200 to the device 20 is used to generate the cold 25. In a step 401 the cold 25 is used for liquefying a gas. This gas may be a part of the natural gas produced from the reservoir 1000 or any other gas unrelated to the natural gas so produced.

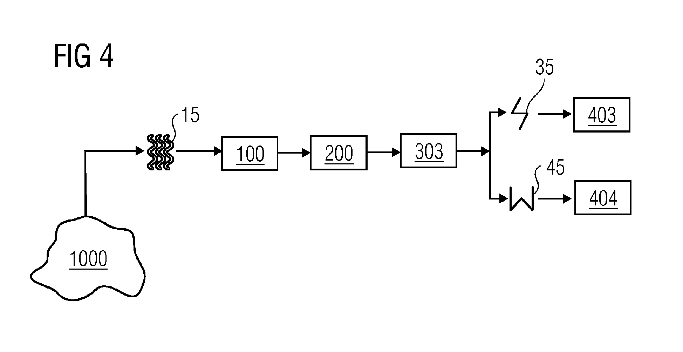

Figure 4 illustrates a schematic drawing of yet another preferable embodiment of the method for using heat obtained from a fossil fuel reservoir to generate another form of energy. In the embodiment the thermal energy 15 is obtained from the reservoir 1000 in the step 100. Atleast a part of the thermal energy 15 is then fed to the device 20 in the step 200. In a step 303, atleast a part of the thermal energy 15 so fed in the step 200 is then converted to another form of energy 35, 45. The other form of energy can be electrical energy 35 or mechanical energy 45. The electrical energy 35 is then used in a step 403 of inputing energy at another step in the processing of the gas. The mechanical energy 45, on the other hand is used in a step 404 of pumping a fluid.

While this invention has been described in detail with reference to certain preferred embodiments, it should be appreciated that the present invention is not limited to those precise embodiments. Rather, in view of the present disclosure which describes the current best mode for practicing the invention, many modifications and variations would present themselves, to those of skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A method for using thermal energy (15) from a fossil fuel reservoir (1000), comprising:
- Obtaining (100) the thermal energy (15) from the fossil fuel reservoir (1000), and
- Feeding (200) atleast a part of the thermal energy (15) so obtained to a thermal energy using device (20).

2. The method according to claim 1, wherein the thermal energy using device (20) uses atleast a part of the thermal energy (15) so fed to convert it to another form of energy (35, 45) and/or to generate cold (25) and/or to transfer the thermal energy (15) to a point.

3. The method according to claim 2, wherein the thermal energy using device (20) uses atleast a part of the thermal energy (15) so fed and generates (301) the cold (25) by absorption refrigeration process.

4. The method according to claim 3, wherein the cold (25) is used for liquefaction of a gas.

5. The method according to claim 2, wherein the thermal energy using device (20) uses atleast a part of the thermal energy (15) so fed and converts (303) it to electrical energy (35).

6. The method according to claim 5, wherein atleast a part of the thermal energy (15) converted to electrical energy (35) is converted (303) by Kalina process and/or organic Rankine process (ORC process) and/or thermoelectric effect.

7. The method according to claims 5 or 6, wherein the electrical energy (35) is used as input energy at another step in the processing of fossil fuel of the reservoir (1000).

8. The method according to claim 2, wherein the thermal energy using device (20) uses atleast a part of the thermal energy (15) so fed and converts (303) it to mechanical energy (45).

9. The method according to claim 8, wherein the mechanical energy (45) is used to pump a fluid.

10. The method according to any of the claims 1 to 9,
wherein the thermal energy (15) is obtained from the fossil fuel extracted from the fossil fuel reservoir (1000) .

11. A system for using thermal energy (15) from a fossil fuel reservoir (1000) comprising:
- Means (10) for obtaining thermal energy adapted to obtain thermal energy from the fossil fuel reservoir (1000), and
- A thermal energy using device (20) wherein the thermal energy using device is thermally connected with the means (10) for obtaining thermal energy.

12. The system according to claim 11, wherein the thermal energy using device (20) is adapted to use atleast a part of the thermal energy (15) to convert it to another form of energy and/or to generate cold and/or to transfer the thermal energy to a point.

13. The system according to claim 11 or 12, wherein the means (10) for obtaining thermal energy (15) is adapted to obtain thermal energy (15) from the fossil fuel extracted from the reservoir (1000).

14. The system according to any of the claims 11 to 13, wherein the thermal energy using device (20) is an absorption refrigerator.

15. The system according to any of the claims 11 to 13, wherein the thermal energy using device (20) is a thermocouple.

16. The system according to any of the claims 11 or 13, wherein the thermal energy using device (20) is a heat engine.

17. The system according to any of the claims 11 or 13, wherein the thermal energy using device (20) is a heat exchanger.
